# NEW EUROPEAN PATENT SPECIFICATION

(11) **EP 0 480 535 B2**
(45) Date of publication and mention of the opposition decision: **23.12.1998**
(45) Mention of the grant of the patent: 12.04.1995
(21) Application number: 91202640.8
(22) Date of filing: 10.10.1991
(51) Int. Cl.: A01B 63/108

(54) **A hydraulic operating system for implement groups**
Hydraulisches Steuersystem für Werkzeuggruppen
Système de réglage hydraulique pour groupes d'outils

(30) Priority: 12.10.1990 NL 9002221
(43) Date of publication of application: 15.04.1992
(73) Proprietor: MAASLAND N.V., 3155 PD Maasland (NL)
(72) Inventor: Bom, Cornelis Johannes Gerardus, NL-3181 VC Rozenburg (NL); Ouwerkerk, Cornelis Gerardus, NL-3181 BE Rozenburg (NL)
(74) Representative: Corten, Maurice Jean F.M.

(56) References cited:
- EP-A- 0 092 025
- DE-A- 3 438 353
- FR-A- 2 622 762
- US-A- 2 614 345
- US-A- 2 626 553
- US-A- 4 067 394
- Ersatzteillisten Amazone ZA-F, DE 393* 10.85 und ZA-U, DE 397* 2.88;
- Fitting Instructions 1480-76-00.02- 1/3.87 and 0/12.82;
- Pricelists Amazone ZA-F and ZA-U, 15.04.1986;
- Prospects Amazone ZA-F D534*11/87 and ZA-U D526*12.86;
- Betriebsanleitung Pneumatik-Düngerstreuer Amazone JET 802/1202, DB 469*10.86;
- Dr.-Ing. H.J. Matthies, "Einführung in die Ölhydraulik", B.G. Teubner, Stuttgart 1984.

## Description

The invention relates to a system as claimed in the preamble of claim 1.

A system of the above-defined type is disclosed in the Betriebsanleitung Anazone Jet 802/1202, DB469.1086. French patent application FR-A- 2 622 762. discloses a system comprises a large number of hydraulic operating members for operating the implement groups. Consequently, a relatively large number of hydraulic lines extend between the tractor hydraulic system and the control elements, with the aid of which the individual functions of the implement groups can be controlled.

In a combined soil working operation wherein various activities are performed in one operating run, the implement groups are usually mounted to the rear side of the tractor as well as to the front side thereof therebeside. This is, for example, the case when a field is simultaneously ploughed, harrowed and drilled. The plough is coupled in the lifting hitch at the rear side of the tractor, whereas the harrows and also the seed drill(s) are located on a frame mounted in the lifting hitch at the front side thereof.

The connection points of the tractor hydraulic system at the front side of the tractor are usually limited in number, or they are completely absent. It is therefore often necessary to provide additional connection points at the front side of the tractor or to provide a plurality of hydraulic lines to extend from the connection points at the rear side of the tractor to the front side thereof. The said measures have the disadvantage that the purchase of additional connection points for mounting at the front side of the tractor is expensive, whilst it is also not always possible to incorporate these additional connection points in the existing hydraulic system, due to e.g. the limited capacity, the difficult mounting of the connection points on the tractor, etc. A further disadvantage is that, when a connection point at the rear side of the tractor is used, the number of connection points for implement groups to be mounted at the rear side of the tractor is limited, while furthermore it is necessary for the hydraulic lines extending alongside the tractor to be mounted in a suitable place, so that they are not an impediment to the driver or to an implement coupled to the tractor.

The invention has for its object to provide a system for operating implement groups of the type as defined in the preamble of claim 1 which has the advantage that, when the distribution means do not through-connect the single hydraulic line to the hydraulic lines leading to the implement groups, the single hydraulic line can be utilized in the said position as an additional connection point. This is achieved by the features as defined in claim 1.

In a specific embodiment, the distribution means include a four-way valve, which is connected to the single hydraulic line and to two hydraulic lines each leading to a different implement group, by means of which four-way valve the hydraulic lines leading to said implement groups can be pressurised simultaneously, separately or not at all.

In a preferred embodiment in accordance with the invention, the distribution means comprise a three-way valve, which is connected to the single hydraulic line and to two hydraulic lines each leading to a different implement group, by means of which three-way valve the hydraulic lines leading to said implement groups can be pressurised separately or not at all. Furthermore, in this embodiment, the distribution means include a shut-off element which optionally bridges or does not bridge the hydraulic lines each leading to an implement group and consequently, if one of the hydraulic lines leading to said implement groups is pressurised, allows simultaneous or independent operation of the two implement groups.

In accordance with a further feature of the invention, at least one of the hydraulic lines leading to one of the implement groups includes one or more passive distribution elements, by means of which hydraulic components of the control elements are connected to the hydraulic lines leading to the implement groups.

In accordance with a still further feature of the invention, the distribution means can be operated from the tractor.

In accordance with a further feature of the invention, at least one control element is operative between the frame and a relevant implement group. The control element controls, in accordance with a further feature of the invention, a movement of the relevant implement group relative to the frame.

In accordance with a still further feature of the invention, the control element controls a function within the relevant implement group.

For a better understanding of the invention and to show how the same may be carried into effect, reference will now be made, by way of example, to the accompanying drawings, in which:
Figure 1 is a schematic plan view of an application of the system according to the invention;
Figure 2 is a diagram of the hydraulic system for a hydraulic operating member in accordance with the invention;
Figure 3 shows, to an enlarged scale, a portion of the system of Figure 1, in a front view taken on the line III - III in Figure 1;
Figure 4 shows, to an enlarged scale, a portion of the system of Figure 1, in a side view taken on the line IV - IV in Figure 1.

In the embodiment, the system in accordance with the invention is used in an implement combination, by means of which a combined soil cultivation of various operations can be effected in one operating run.

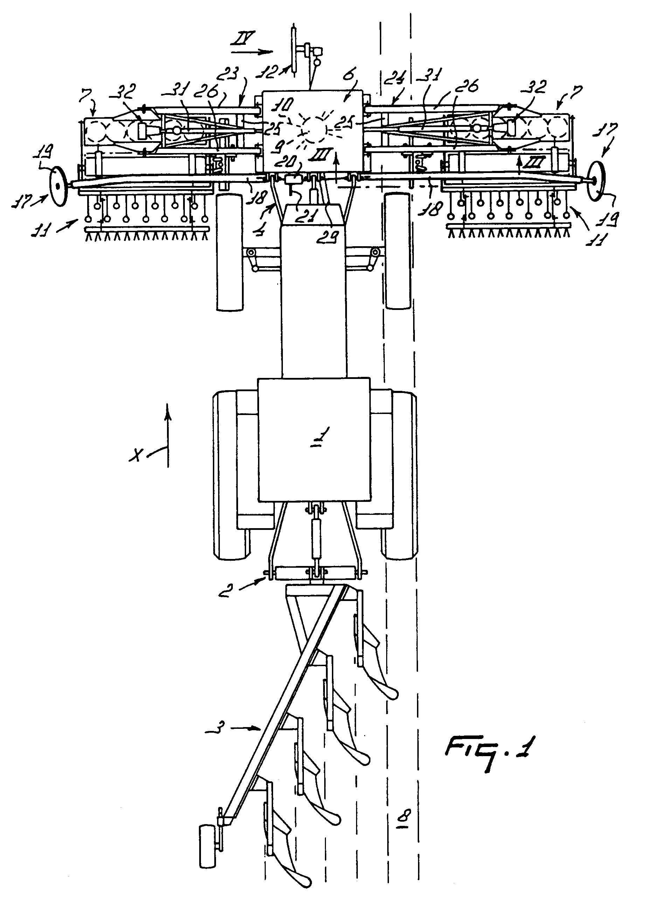

Figure 1 is a plan view of a tractor 1, to which is coupled, at its rear side in the (three-point) lifting hitch 2, a plough 3. Front-mounted to the tractor 1 is a second three-point lifting hitch 4, to which is coupled a frame 5 having provided thereon a seed drill 6 and two rotary harrows 7. The implement combination allows of a simultaneous ploughing, harrowing and drilling of a field.

The seed drill 6 includes a distribution mechanism 9, by means of which groups of lines 10, for conveying seed material to the seed coulters 11, can be connected thereto or be disconnected therefrom. At the front side of the frame 5 there is arranged a stepper wheel 12 which, during operation, moves over the soil and by means of which can be driven a (non-shown) dosing mechanism for the said seed material. The stepper wheel 12 is connected pivotably to the hopper 15 via an arm 13. The arm 13, which extends upwardly, is connected pivotably to a hydraulic adjusting cylinder 14, the other end of which is connected pivotably to the hopper 15 of the seed drill 6. The adjusting cilinder 14 can be operated hydraulically via a line 16.

The frame 5 is furthermore provided with markers 17, by means of which the drive paths are marked. Each marker 17 includes an arm 18 which is attached pivotably to the frame 5 and at its outer end is provided with a rotatable disc 19. During operation, one of the two discs 19 bears on the soil, whereas the other one is swivelled upwardly. At the end of an operating run, during turning, a change of markers occurs. A marker switching device 20 provided on the frame ensures that the marker 17 bearing on the soil is deflected upwardly and the other one is lowered onto the soil. The operation of the marker switching device 20 is effected fully automatically and hydraulically via the line 21 during turning.

Figure 3 is a front view of part of the frame 5, which comprises a central frame portion 22 having on either side a pivotal frame portion 23, 24. Figure 1 shows that each pivotal frame portion 23, 24 includes a frame beam 25, which extends in the direction of operative travel X and to which are fitted, transversely to the direction of operative travel X, two parallel frame beams 26.

The one end of each frame beam 26 is connected pivotably to the central frame portion 22, while the other end is connected pivotably to the rotary harrow 7.

Between the central frame portion 22 and the frame beam 26 there is arranged pivotably a hydraulic adjusting cylinder 27 (see Figure 3). Energizing the adjusting cylinder 27 via line 28 results in the frame beam 26 being pivoted, which is shown by means of interrupted lines in Figure 3.

The rotary harrows 7 are power-driven from a power take-off shaft 29 at the front side of the tractor. This power take-off shaft is coupled by means of a coupling shaft to a gear box 30 located on top of the central frame portion 22. The gear box 30 has a coupling shaft 31 on either side, which coupling shafts 31 have their other ends connected to gear boxes 32 of the rotary harrows 7. Each of the coupling shafts 31 is provided with a hydraulic coupling 33, by means of which the rotary harrow 7 can be rendered operative or inoperative via a line 34.

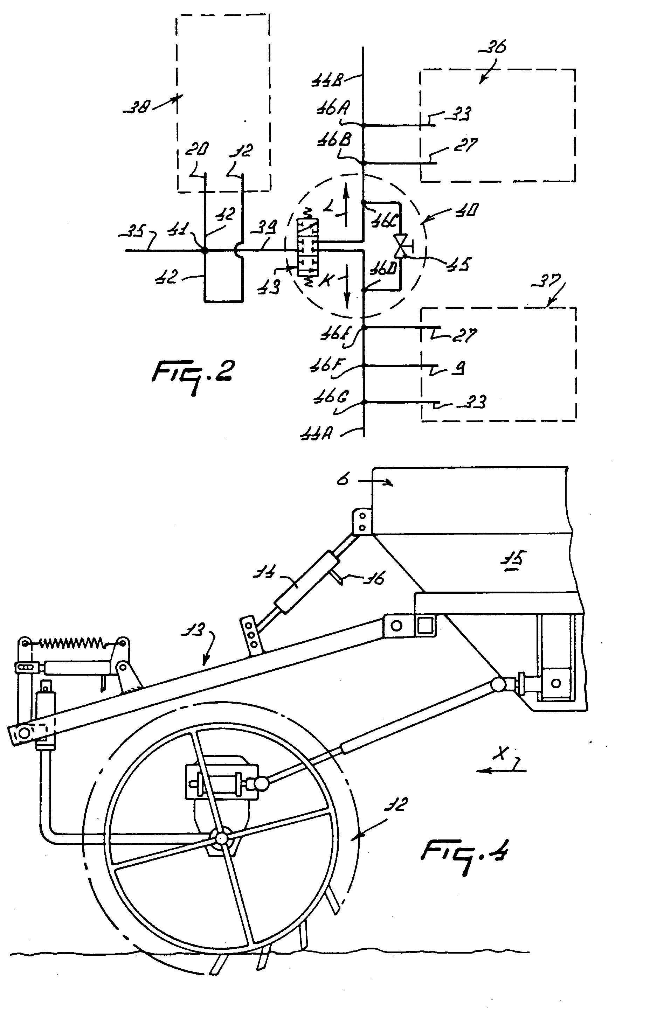

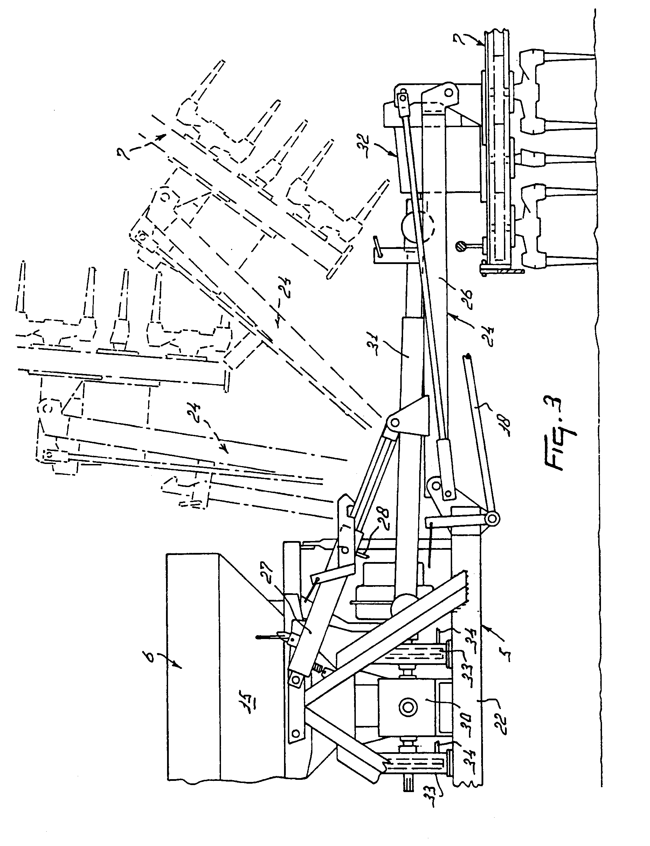

In order to operate the hydraulic components shown in Figures 1, 3 and 4, use can be made of the hydraulic system 35 of the tractor. Figure 2 illustrates an embodiment in accordance with the invention of a hydraulic diagram for operating the implement groups 36, 37, 38. The diagram shows one single hydraulic line 39 originating from the hydraulic system 35 of the tractor, which single hydraulic line 39 is coupled, e.g. via a snap-on connection, to the distribution and control means 40.

In the single hydraulic line 39 there is incorporated a passive distribution element 41 comprising two connection points 42 thereto. Using snap-on connections, the marker switching device 20 and the stepper wheel 12 are connected to the connection points 42 of the passive distribution element 41.

The distribution means 40 are constituted by an (electrically operable) three-way valve 43 which, in addition to the connection point of the single hydraulic line 39, includes two further connection points, to which two lines 44A and 44B are connected, which lines can be interconnected via a ball valve 45. Two passive distribution elements 46A and 46B, e.g. in the form of a T-section, are incorporated in the two lines 44A and 44B. The passive distribution elements 46C and 46D constitute connections for the ball valve 45 to the respective hydraulic lines 44A and 44B, The passive distribution elements 46B and 46E constitute connections of the hydraulic swivelling cylinders 31 for swivelling the left-hand and the right-hand pivotal frame portions 23 and 24, respectively, to the hydraulic lines 44A and 44B, respectively.

In addition, the passive distribution elements 46A and 46B constitute connection points on the hydraulic lines 44A and 44B, respectively, for the lines 34 of the hydraulic couplings 33 of the rotary harrows 7 shown in Figure 1.

The passive distribution element 46F constitutes a connection point to the line 44B of the distribution mechanism 9 of the seed drill 6. It will be obvious that it is possible to incorporate still further passive distribution elements in the hydraulic line 44A and/or 44B, which further elements constitute a connection to further hydraulic control elements of implement groups 36 and 37.

The above-described system in accordance with the invention operates as follows.

Using a (non-shown) lever in the tractor 1, the single line 39 can be pressurized or be depressurized (the latter position being the so-called floating position).

The (electric) three-way valve 43, which is also operable from the tractor, provides the possibility of chosing, e.g. by means of push buttons, from three positions, i.e. through-connecting the single line 39 to the line 44A (in this case the valve slide must be moved from the position shown (see Figure 2) into the direction indicated by the arrow K), through-connecting the single line 39 to the line 44B (in this case the valve slide must be moved from the position shown (see Figure 2) into the direction of the arrow L), or moving the valve slide to the position shown in Figure 2 (in this case there is no connection between the single line 39 and any one of the lines 44A and 44B).

At the start of an operating run with the said implement groups 36, 37 and 38, the three-way valve 43 is adjusted from the position shown into the direction indicated by the arrow K or L. This depends on the fact whether the left-hand or the right-hand rotary harrow and seed coulters 11 are to be operative, which again depends on the fact whether the plot 8 to the left or to the right of the tractor 1 has been worked by the plough 3. In that case the ball valve 45 is in the closed state, so that by pressurizing the single line 39 all the control members (cylinders, couplings etc.) of the left-hand implement group 36 or of the right-hand implement group 37 are energized simultaneously, thereby causing the left-hand frame portion 23 or the right-hand frame portion 24 to deflect upwardly. At the same moment, the relevant hydraulic coupling 33 is decoupled and the proper group of lines 10 leading to the left-hand seed coulters or to the right-hand seed coulters is connected and disconnected by means of the distribution mechanism 9.

After the pivotal frame portions 23, 24 have been moved to the desired position (one is deflected upwardly and the other one is adjusted to the working position), the single line 39 is disconnected from the lines 44A and 44B. By depressurizing the single line 39, the cylinder 14 of the stepper wheel 12 is released, as a result of which the stepper wheel 12 comes to bear on the plot 8. Simultaneously, the marker switching device 20 switches from the one marker disc 19 to the other.

At the end of the operating run, the frame portion 23 or 24 that is in the operating condition is deflected upwardly by means of the three-way valve 43, by pressurizing the relevant implement group 36 or 37. After turning, the frame portion 23 or 24, which was deflected upwardly in the preceding operating run, is lowered by depressurising the relevant line 44A or 44B.

Thereafter, the stepper wheel 12 and the marker 17 are adjusted to the desired position by depressurizing the single line 39, after which the next operating run can be started.

After the plot 8 has been worked, the lines 44A, 44B and the single line 39 are pressurized; the valve 45 must then be open. This causes the implement groups 36, 37 and 38 (the marker switching device 20 excepted) to deflect upwardly, after which they can be locked. Thereafter, the arms 18 of the markers 17 must be swivel led upwardly and be locked by hand, after which the whole system is in the transport position and is ready to be transported.

It will be obvious that the above-described method will be slightly different for a different implement combination, e.g. two rotary harrows + seed drills at the front side of the tractor and one rotary harrow + seed drill at the rear side thereof (all three implement groups being in the operating condition during an operating run). However, the essence, consisting in deflecting and pressurizing or depressurizing the hydraulic lines of the implement groups, is the same for any such combination.

The invention is not limited to the features described in the foregoing, but also relates to all the details of the drawings, whether they have been described or not.

## Claims

1. A system for operating implement groups (36, 37), connectable to a frame (5) with a central frame portion (22) and on either side thereof a pivotal frame portion (23, 24), the central frame portion (22) being hitchable to a lifting hitch (4) of a tractor (1), while at least two of the frame portions (22, 23, 24) are provided with one such implement group (36, 37), which system includes hydraulic control elements (9, 14, 20, 27, 33) for operating the said implement groups (36,37), said system includes distribution and control means (40) for operating the hydraulic control elements (9, 14, 20, 27, 33) of the implement groups (36, 37) not at all, separately or simultaneously, and said system is connectable to the tractor hydraulic system by one single hydraulic line (39). characterized in that the single hydraulic line (39) includes one or more passive distribution elements (41), to which a third implement group (38) is connectable, which includes control elements (14, 20).

2. A system as claimed in claim 1, characterized in that the distribution means (40) include a four-way valve, which is connected to the single hydraulic line (39) and to two hydraulic lines (44A, 44B) each leading to a different implement group (36, 37), by means of which four-way valve the hydraulic lines (44A, 44B) leading to said implement groups (36, 37) can be pressurised simultaneously, separately or not at all.

3. A system as claimed in claim 1, characterized in that the distribution means (40) comprise a three-way valve (43), which is connected to the single hydraulic line (39) and to two hydraulic lines (44A, 44B) each leading to a different implement group (36, 37), by means of which three-way valve (43) the hydraulic lines (44A, 44B) leading to said implement groups (36, 37) can be pressurised separately or not at all, as well as a shut-off element (45) which optionally bridges or does not bridge the hydraulic lines (44A, 44B) each leading to an implement group (36, 37) and consequently, if one of the hydraulic lines (44A, 44B) leading to said implement groups (36, 37) is pressurised, allows simultaneous or independent operation of the two implement groups (36, 37).

4. A system as claimed in claim 2 or 3, characterized in that at least one of the hydraulic lines (44A, 44B) leading to one of the implement groups (36, 37) includes at least one passive distribution element (46A, 46B, 46C, 46D, 46E, 46F, 46G), by means of which hydraulic components of the control elements (9, 27, 33) are connected to the hydraulic lines (44A, 44B) leading to the implement groups (36, 37).

5. A system as claimed in any one of the preceding claims, characterized in that the distribution means (40) are operable from the tractor (1).

6. A system as claimed in claim 6, characterized in that at least one control element (9, 14, 20, 27, 33) is operative between the frame (5) and a relevant implement group (36, 37, 38).

7. A system as claimed in claim 6, characterized in that the control element (14, 27, 33) controls a movement of the relevant implement group (36, 37, 38) relative to the frame (5).

8. A system as claimed in claim 5, characterized in that the control element (9, 14, 20, 27, 33) controls a function within the relevant implement group (36, 37, 38).

## Patentansprüche

1. System zum Steuern von Gerätegruppen (36, 37), die an einen Rahmen (5) anzuschließen sind, der einen zentralen, an die Hebevorrichtung (4) eines Schleppers (1) anzuschließenden Rahmenteil (22) mit beiderseits angeordneten schwenkbaren Rahmenteilen (23, 24) aufweist, wobei mindestens zwei der Rahmenteile (22, 23, 24) mit einer Gerätegruppe (36, 37) versehen sind, wobei das System hydraulische Steuerelemente (9, 14, 20, 27, 33) zum Steuern der Gerätegruppen (36, 37) aufweist, wobei das System eine Verteiler- und Steuereinheit (40) aufweist, um die hydraulischen Steuerelemente (9, 14, 20, 27, 33) der Gerätegruppen (36, 37) unbetätigt zu lassen oder einzeln oder gemeinsam zu betätigen, und wobei das System mittels einer einzelnen Hydraulikleitung (39) an das Hydrauliksystem des Schleppers anzuschließen ist,
dadurch gekennzeichnet, daß die einzelne Hydraulikleitung (39) ein oder mehrere passive Verteilerelemente (41) aufweist, an die eine dritte, Steuerelemente (14, 20) enthaltende Gerätegruppe (38) anzuschließen ist.

2. System nach Anspruch 1,
dadurch gekennzeichnet, daß die Verteilereinheit (40) ein Vierwegeventil enthält, das mit der einzelnen Hydraulikleitung (39) sowie mit zwei Hydraulikleitungen (44A, 44B) verbunden ist, die an je eine Gerätegruppe (36, 37) gefuhrt sind, wobei die an die Gerätegruppen (36, 37) angeschlossenen Hydraulikleitungen (44A, 44B) mittels des Vierwegeventiles gemeinsam oder einzeln mit Druck zu beaufschlagen oder drucklos zu halten sind.

3. System nach Anspruch 1,
dadurch gekennzeichnet, daß die Verteilereinheit (40) ein Dreiwegeventil (43) enthält, das mit der einzelnen Hydraulikleitung (39) sowie mit zwei Hydraulikleitungen (44A, 44B) verbunden ist, die an je eine Gerätegruppe (36, 37) angeschlossen sind, wobei die an die Gerätegruppen (36, 37) geführten Hydraulikleitungen (44A, 44B) mittels des Dreiwegeventiles (43) einzeln mit Druck zu beaufschlagen oder drucklos zu halten sind; die Verteilereinheit hat ferner ein Absperrelement (45), das die an je eine Gerätegruppe (36, 37) geführten Hydraulikleitungen (44A, 44B) wahlweise überbrückt oder nicht überbrückt, so daß die beiden Gerätegruppen (36, 37) gemeinsam oder unabhängig voneinander zu betätigen sind, wenn eine der an die Gerätegruppen (36, 37) geführten Hydraulikleitungen (44A, 44B) mit Druck beaufschlagt wird.

4. System nach Anspruch 2 oder 3,
dadurch gekennzeichnet, daß mindestens eine der Hydraulikleitungen (44A, 44B), die an eine der Gerätegruppen (36, 37) geführt ist, mindestens ein passives Verteilerelement (46A, 46B, 46C, 46D, 46E, 46F, 46G) aufweist, mittels dessen hydraulische Komponenten der Steuerelemente (9, 27, 33) mit den Hydraulikleitungen (44A, 44B) verbunden sind, die an die Gerätegruppen (36, 37) geführt sind.

5. System nach einem der vorhergehenden Ansprüche,
dadurch gekennzeichnet, daß die Verteilereinheit (40) vom Schlepper (1) aus zu betätigen ist.

6. System nach Anspruch 4 oder 5,
dadurch gekennzeichnet, daß mindestens ein Steuerelement (9, 14, 20, 27, 33) zwischen dem Rahmen (5) und einer zugehörigen Gerätegruppe (36, 37, 38) wirksam ist.

7. System nach Anspruch 6,
dadurch gekennzeichnet, daß das Steuerelement (14, 27, 33) eine Bewegung der zugehörigen Gerätegruppe (36, 37, 38) relativ zu dem Rahmen (5) steuert.

8. System nach Anspruch 6,
dadurch gekennzeichnet, daß das Steuerelement (9, 14, 20, 27, 33) eine Funktion innerhalb der zugehörigen Gerätegruppe (36, 37, 38) steuert.

## Revendications

1. Système pour faire fonctionner des groupes de machines (36, 37) pouvant être reliés à un châssis (5) avec une partie centrale (22) du châssis et sur chaque côté de celle-ci une partie de châssis pivotante (23, 24), la partie centrale (22) du châssis pouvant être attelée à un dispositif d'attelage-levage (4) d'un tracteur (1), tandis qu'au moins deux des parties (22, 23, 24) du châssis sont munies d'un de ces groupes de machines (36, 37), lequel système comprend des éléments hydrauliques de commande (9, 14, 20, 27, 33) pour faire fonctionner lesdits groupes de machines (36, 37) ledit système comprenant des moyens de distribution et de commande (40) pour faire fonctionner les éléments hydrauliques de commande (9, 14, 20,27, 15,33) des groupes de machines (36, 37) séparément, mais pas forcément tous, ou simultanément, et ledit système pouvant être relié au système hydraulique du tracteur par une seule et unique conduite hydraulique (39), caractérisé en ce que la conduite hydraulique unique (39) comprend un ou plusieurs éléments passifs de distribution (41) auxquels peut être relié un troisième groupe de machines (38) comprenant des éléments de commande (14, 20).

2. Système selon la revendication 1, caractérisé en ce que les moyens de distribution (40) comprennent une vanne à quatre voies qui est reliée à la conduite hydraulique unique (39) et à deux conduites hydrauliques (44A, 44B) aboutissant chacune a' un groupe différent de machines (36, 37), ladite vanne à quatre voies permettant de mettre en pression simultanément, séparément ou pas du tout, les conduites hydrauliques (44A, 44B) aboutissant auxdits groupes de machines (36, 37).

3. Système selon la revendication 1, caractérisé en ce que les moyens de distribution (40) comprennent une vanne à trois voies (43) qui est reliée à la conduite hydraulique unique (39) et à deux conduites hydrauliques (44A, 44B) aboutissant chacune à un groupe différent de machines (36, 37), ladite vanne à trois voies (43) permettant de mettre en pression, séparément ou pas du tout, les conduites hydrauliques (44A, 44B) aboutissant auxdits groupes de machines (36, 37), ainsi qu'un élément interrupteur (45) qui établit au choix un passage entre les conduites hydrauliques (44A, 44B) aboutissant chacune à un groupe de machines (36, 37) ou n'établit pas ce passage, et par conséquent, si une des conduites hydrauliques (44A, 44B) aboutissant auxdits groupes de machines (36, 37) est mise en pression, cet élément interrupteur (45) permet un fonctionnement simultané ou indépendant des deux groupes de machines (36, 37).

4. Système selon la revendication 2 ou 3, caractérisé en ce qu'au moins une des conduites hydrauliques (44A, 44B) aboutissant à un des groupes de machines (36, 37) comprend au moins un élément passif de distribution (46A, 46B, 46C, 46D, 46E, 46F, 46G) au moyen duquel des composants hydrauliques des éléments de commande (9, 27, 33) sont reliés aux conduites hydrauliques (44A, 44B) aboutissant aux groupes de machines (36, 37).

5. Système selon l'une quelconque des revendications précédentes, caractérisé en ce que les moyens de distribution (40) peuvent être actionnés à partir du tracteur (1).

6. Système selon la revendication 4 ou 5, caractérisé en ce qu'au moins un élément de commande (9, 14, 20, 27, 33) agit entre le châssis (5) et un groupe de machines correspondant (36, 37, 38).

7. Système selon la revendication 6, caractérisé en ce que l'élément de commande (14, 27, 33) commande un mouvement du groupe de machines correspondant (36, 37, 38) par rapport au châssis (5).

8. Système selon la revendication 6, caractérisé en ce que l'élément de commande (9, 14, 20, 27, 33) commande une fonction à l'intérieur du groupe de machines correspondant (36, 37, 38).
